# FASCICULE DE BREVET EUROPEEN

(11) **EP 0 595 737 B1**
(45) Date de publication et mention de la délivrance du brevet: **24.04.1996**
(21) Numéro de dépôt: 93420417.3
(22) Date de dépôt: 25.10.1993
(51) Int. Cl.: B29C 47/88

(54) **Dispositif pour le placage de produits en feuille ou plaque sur un tambour de refroidissement**
Vorrichtung zum Beschichten von Folien oder Schichten auf einer Kühltrommel
Apparatus for plating foils or sheets on a cooling drum

(30) Priorité: 26.10.1992 FR 9213072
(43) Date de publication de la demande: 04.05.1994
(73) Titulaire: DARLET MARCHANTE TECHNOLOGIE S.A., F-73370 Le Bourget du Lac (FR)
(72) Inventeur: Dupraz, Raymond, F-73100 Aix les Bains (FR)
(74) Mandataire: Perrier, Jean-Pierre

(56) Documents cités:
- EP-A- 0 051 699
- US-A- 3 597 515

## Description

Dans d'innombrables applications, il est nécessaire de refroidir rapidement, au contact d'un tambour cylindrique, des produits conformés à haute température sous forme de plaque ou de feuille. C'est le cas en particulier dans l'industrie des matières plastiques et dans l'industrie des caoutchoucs.

Dans certains cas, en particulier lorsque les produits ont une nature cristalline, de la rapidité du refroidissement dépend, dans une très grande partie, la qualité des produits qui seront ultérieurement constitués à partir de ces feuilles ou plaques.

Différentes conceptions de tambour sont utilisées, qui sont plus ou moins performantes.

L'efficacité de ces tambours dépend, dans une très grande partie, de l'intimité du contact entre la face intérieure du film et la surface extérieure du tambour. D'une manière générale, lorsqu'une feuille ou plaque extrudée arrive sur un tambour sans aucune autre précaution et sans l'aide d'aucun dispositif annexe, la feuille a tendance à ne pas adhérer à la surface du tambour, et sous l'effet d'un refroidissement irrégulier, à se déformer, ce qui la rend complètement inutilisable. Pour remédier à cet inconvénient, un très grand nombre de dispositifs, appelés dispositifs de placage, ont été utilisés. L'un des dispositifs, les plus couramment utilisés, plaque le produit à refroidir contre la surface du tambour par un jet d'air à grande vitesse et à haute pression qui assure un contact intime et une mise en place régulière de la feuille sur le tambour. Ces dispositifs sont généralement appelés des lames d'air. Le document US-A-3 597 515 décrit un tel dispositif.

Il sont en général constitués par un corps tubulaire, disposé, transversalement au-dessus du tambour, alimenté par un ventilateur ou un compresseur et débitant, par deux lèvres longitudinales ménagées à l'extrémité d'un convergent, une lame d'air orientée sensiblement radialement par rapport au tambour.

Le niveau de pression élevé qui règne à l'intérieur du corps crée, grâce à l'angle convergent des lèvres, une vitesse élevée de déplacement du flux d'air qui, venant percuter la feuille, exerce sur celle-ci l'effort de placage souhaité.

Pour une telle application, la régularité du placage sur la largeur dépend de la régularité d'ouverture des lèvres et pour cette raison, différents systèmes de vis différentielles ou dans le cas des lames d'air les plus sophistiqués, l'utilisation de lèvres flexibles déformables, permettent, par réglage, l'obtention d'un jet homogène sur toute la largeur du film.

Il est évident que pour obtenir un placage régulier, la largeur de soufflage doit être au minimum égale à la largeur du film. Si la largeur de soufflage est inférieure, on obtient un placage insuffisant sur les bords.

Ceci constitue une première source de problèmes d'exploitation. En effet, selon la matière constitutive des feuilles ou plaques et selon leur vitesse de défilement, la largeur de la feuille varie sur le tambour dans des proportions plus ou moins grandes.

Pour cette raison, il est courant d'utiliser une largeur de soufflage qui excède la largeur du film le plus large qui doit être plaqué, car il n'existe pas, à ce jour, de dispositifs qui, débitant une lame d'air réglable en longueur pour s'adapter à la largeur de la feuille, n'engendre pas sur les bords de la lame d'air des tourbillons et remous affectant le placage.

Il en résulte qu'un flux d'air, dans lequel touts les filets sont parallèles entre eux, percute la surface du film et, de part et d'autre du film, la surface du tambour. Cette distribution entraîne un inconvénient majeur car, quelles que soient les précautions prises au niveau de l'extrusion, les bords de la feuille ont une épaisseur généralement supérieure au reste de la feuille et ont tendance à s'enrouler sur eux-mêmes, généralement vers la face opposée au tambour.

Il est évident, dans ces conditions, que la percussion par un jet d'air à grande vitesse d'un bord qui a tendance à s'enrouler crée des perturbations importantes, la plus importante étant le passage d'air sous la feuille et, par voie de conséquence, le décollement de la feuille par rapport au tambour, ce qui va à l'encontre de l'effet souhaité.

Pour remédier à cet effet particulièrement important dans le cas des films biorientés, il est courant d'utiliser, entre la filière et le point d'impact de l'air, des jets d'air supplémentaires, dits "de bords", dont la fonction est de plaquer les bords de film sur le tambour et donc de les rendre plats avant que le film n'arrive dans la zone d'impact de la lame d'air, évitant ainsi les inconvénients mentionnés ci-dessus.

Ces dispositifs sont bien entendu montés sur des tables de positionnement car il est indispensable, pour un bon fonctionnement, que le jet ait une orientation angulaire précise et frappe en un point très précis.

Malheureusement, les bords sont par nature instables et d'infimes changements dans la température de la matière ou dans sa viscosité modifient l'aspect et la position des bords. Les soufflettes de bord sont donc très difficiles à régler et constituent une source permanente d'ennuis.

L'objectif de la présente invention est de résoudre l'ensemble de ces problèmes en utilisant une lame d'air dont la largeur effective utile soit aisément réglable sans perturbation et en rendant inutile l'utilisation complémentaire de soufflettes de bord.

A cet effet, le dispositif selon l'invention comporte, dans le convergent longitudinal et saillant de chacune des parois latérales du corps tubulaire, un déviateur de flux qui, calé sur des moyens permettant de régler sa position par rapport à la paroi latérale du corps, présente, d'une part, en section transversale, une forme identique au jeu fonctionnel près à celle de la section du convergent, et, d'autre part, et en vis à vis de l'autre déviateur, un profil convexe ayant la forme générale de l'extrados d'une aile et dont la courbe polaire est définie pour incliner, vers l'extérieur et progressivement, la direction d'écoulement du flux d'air le longeant, sans décollement d'extrados.

Ce dispositif permet donc d'obtenir une lame d'air, transversale et radiale au film, composée, dans sa partie centrale, de filets d'air parallèles entre eux et radiaux, et, sur les deux bords, de filets d'air ayant une vitesse presque identique aux premiers, mais de direction inclinée par rapport à eux, et plus précisément s'écartant vers l'extérieur.

Grâce à ce dispositif, il est possible de plaquer régulièrement la totalité de la largeur de la feuille, y compris ses bords, en obtenant un effort identique sur toute la largeur de cette feuille et en empêchant ses bords de s'enrouler sur eux-mêmes.

Par ailleurs, et avec une disposition appropriée des déviateurs, les jets d'air marginaux, et en conséquence, les jets d'air inclinés par rapport à la trajectoire normale de la lame d'air, exercent sur les bords de la feuille des efforts qui s'opposent à l'enroulement sur eux-mêmes de ces bords.

Un tel dispositif permet de plaquer les feuilles ou plaques dans de très bonnes conditions, tout en supprimant le recours à toutes soufflettes de placage des bords.

D'autres caractéristiques et avantages ressortiront de la description qui suit en référence au dessin schématique annexé, représentant à titre d'exemple non limitatif, une forme d'exécution du dispositif selon l'invention.
Figure 1 est une vue en plan par dessus montrant la disposition du dispositif de placage par rapport au tambour de refroidissement et à la feuille devant être refroidie,
Figure 2 est une vue en coupe suivant II-II de figure 1 montrant, à échelle agrandie, le dispositif de placage par lame d'air,
Figure 3 est une vue partielle en plan par dessus et en coupe transversale montrant, à échelle agrandie, la disposition d'un déviateur de jets.

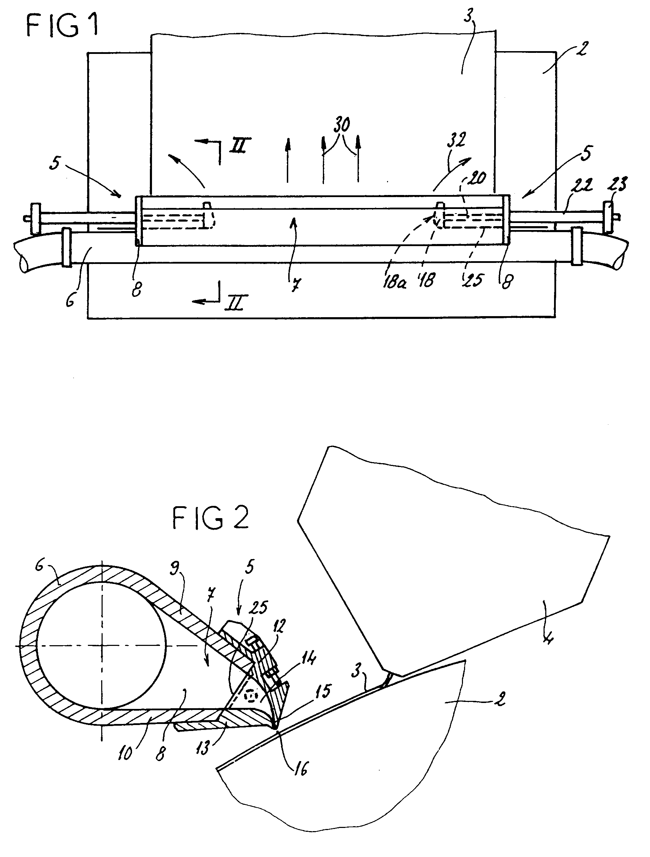

Dans ce dessin, la référence 2 désigne un tambour cylindrique de refroidissement pour une feuille 3 provenant d'une filière 4, montrée à la figure 2. La référence 5 désigne, de manière générale, un dispositif assurant le placage de la feuille 3 sur le tambour 2. Ce dispositif est composé d'un corps tubulaire 6 raccordable par tous moyens connus, à une source d'air comprimée, de type ventilateur ou compresseur. Ce corps, disposé transversalement au-dessus du tambour, c'est à dire avec son axe longitudinal perpendiculaire à la trajectoire de déplacement de la feuille 3, comporte, sur l'aval, un convergent 7 délimité par deux parois latérales 8 et par deux parois longitudinales, respectivement, supérieure 9 et inférieure 10. A son extrémité, et de façon connue, le convergent est muni de deux lèvres, respectivement, supérieure 12 et inférieure 13, délimitant un espace interne 14 se rétrécissant pour former une fente 15 débitant, au-dessus de la feuille 3, une lame d'air 16 dont le plan médian est sensiblement radial au tambour 2.

Selon l'invention, le dispositif comporte, dans le convergent 7 et en saillie de chacune des parois latérales 8 de ce convergent, un déviateur 18 du flux d'air.

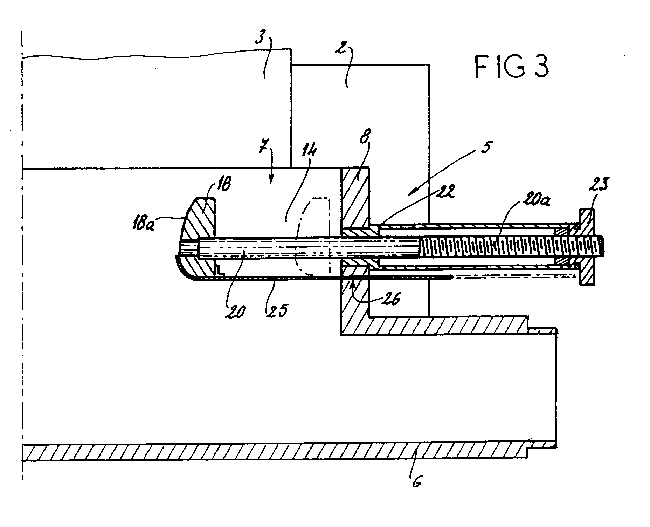

La figure 2 montre que le déviateur présente, en section transversale, une forme identique au jeu fonctionnel près à celle de la section terminale du convergent 7, tandis que la figure 3 montre que, chaque déviateur présente, en vis à vis de l'autre déviateur, un profil convexe 18a ayant la forme générale de l'extrados d'une aile d'avion, c'est à dire présente une courbure dont la courbe polaire est définie pour incliner, vers l'extérieur, la direction du flux d'air longeant ce profil, et cela sans décollement d'extrados, c'est à dire sans formation de tourbillons perturbant les jets d'air.

Chaque déviateur 18 est calé à l'extrémité interne d'une tige cylindrique 20, traversant transversalement la paroi latérale 8 correspondante du dispositif de placage. Dans la forme d'exécution représentée, la tige 20 traverse axialement un fourreau 22 et comporte, à son extrémité externe, une partie filetée 20a coopérant avec un bouton de réglage 23, en appui sur l'extrémité du fourreau. Le filetage 20a étant à pas fin, on conçoit aisément que la rotation du bouton 23 permet d'effectuer un réglage micrométrique de la position du déviateur 18 dans le convergent 7.

La tige 18 est calée en rotation par rapport à la paroi 8. Dans la forme d'exécution représentée, ce calage est assuré par une plaque d'obturation 25 dont l'extrémité interne est solidaire du déviateur 18 et dont le corps traverse la paroi 8 par une lumière 26 appropriée.

Comme le montre la figure 2, cette plaque s'étend sur toute la largeur du convergent, de manière à éviter tout passage d'air entre l'extrémité du déviateur 18 et la paroi latérale 8.

L'extrémité externe de la plaque 25 coopère avec des graduations portées par le fourreau 22 pour indiquer, à l'extérieur, la position longitudinale du déviateur 18 à l'intérieur du convergent 7.

En fonctionnement, le flux d'air pénétrant dans le corps tubulaire est canalisé par des moyens connus, non représentés, pour former sur la plus grande partie de la lame d'air 16 montrée à la figure 2, des filets d'air 30 (figure 1), de direction sensiblement radiale par rapport au tambour 2 et parallèles entre eux. Seuls les filets d'air 32 longeant les déviateurs 18 sont progressivement inclinés vers l'extérieur pour provoquer un élargissement de la lame d'air, sans pour autant que cela génère, d'une part, une réduction trop importante de leur vitesse, et d'autre part, la création de mouvements tourbillonnaires pouvant perturber la régularité du débit de la lame d'air et la qualité du placage recherché.

En cas de besoin, la position de chaque déviateur 18 dans le convergent 7 peut être réglée précisément en actionnant ses moyens de commande constitués par le bouton 23.

En général, les déviateurs sont réglés à être à l'intérieur de la feuille 3 en défilement, afin que les jets latéraux et obliques ainsi obtenus assurent un bon placage des bords de la feuille sur le tambour, en s'opposant à la tendance de ces bords à s'enrouler sur eux-mêmes.

Un tel dispositif permet donc d'obtenir un excellent placage de la feuille ou plaque en défilement, y compris sur ses bords, tout en tolérant une variation de largeur de cette feuille ou plaque. Par ailleurs, en cas de variations importantes de largeur, ce dispositif permet, en fonctionnement, d'ajuster la position des déviateurs 18, ce qui est impossible avec les dispositifs de placage actuels.

Enfin, le dispositif selon l'invention permet de supprimer les soufflettes de placage des bords nécessitant un ajustement continu de leur position, en raison des variations de largeur des feuilles ou plaques.

## Revendications

1. Dispositif pour plaquer sur un tambour de refroidissement des produits en plaque ou en feuille, type composé d'un corps tubulaire (6) disposé transversalement au-dessus du tambour (2), raccordable à une source d'air sous pression et comportant, aux extrémités d'un convergent longitudinal (7) deux lèvres, débitant une lame d'air (16) de direction sensiblement radiale par rapport au tambour (2), **caractérisé en ce qu**'il comporte, dans le convergent longitudinal (7) et saillant de chacune des parois latérales (8) de convergent, un déviateur de flux (18) qui, calé sur des moyens (20) permettant de régler sa position par rapport à la paroi latérale (8), présente, d'une part, en section transversale, une forme identique, au jeu fonctionnel près, à celle de la section du convergent (7), et, d'autre part, et en vis à vis de l'autre déviateur, un profil convexe (18a) ayant la forme générale de l'extrados d'une aile et dont la courbe polaire est définie pour incliner, vers l'extérieur, et progressivement, la direction d'écoulement du flux d'air le longeant, sans décollement d'extrados.

2. Dispositif selon la revendication 1, **caractérisé en ce que** la partie amont de chaque déviateur (18) est solidaire d'une plaque interne (25), traversant la paroi latérale (8) du convergent (7) par une lumière (26) et occultant la partie latérale non utile du convergent.

3. Dispositif selon l'une quelconque des revendications 1 à 2, **caractérisé en ce que** chaque déviateur (18) est calé à l'extrémité interne d'une tige cylindrique (20) qui, calée en rotation par rapport à la paroi latérale (8) du convergent, traverse axialement un fourreau (22) lié à cette paroi et comporte une extrémité externe filetée (20a) sur laquelle se visse un bouton de réglage (23) en appui sur le fourreau (22).

## Claims

1. Device for pinning products in the form of sheet or in the form of film to a cooling drum, of the type composed of a tubular body (6) arranged transversely above the drum (2), which can be connected to a pressurized-air source and including, at the ends of a longitudinal combining nozzle (7), two lips delivering an air-knife (16) having a direction substantially radial with respect to the drum (2), characterized in that it includes, in the longitudinal combining nozzle (7) and projecting from each of the side walls (8) of the combining nozzle, a flow deflector (18) which, fastened to means (20) enabling its position with respect to the side wall (8) to be adjusted, has, on the one hand, in cross-section a shape which is identical, to within the functional clearance, to that of the section of the combining nozzle (7) and, on the other hand, and with respect to the other deflector, a convex profile (18a) which has the general shape of the upper surface of a wing and the polar curve of which is defined so as to incline, progressively and towards the outside, the outflow direction of the air flow hugging it, without upper-surface separation.

2. Device according to Claim 1, characterized in that the upstream part of each deflector (18) is fastened to an internal plate (25) passing through the side wall (8) of the combining nozzle (7) via a slot (26) and occulting the lateral part of the converging nozzle not being used.

3. Device according to either of Claims 1 and 2, characterized in that each deflector (18) is fastened to the internal end of a cylindrical rod (20) which, prevented from rotating with respect to the side wall (8) of the combining nozzle, passes axially through a barrel (22) connected to this wall and includes a threaded external end (20a) on which is screwed an adjustment knob (23) bearing on the barrel (22).

## Patentansprüche

1. Vorrichtung zum Anpressen von Platten- oder Folienerzeugnissen an eine Kühlwalze, mit einem rohrförmigen Körper (6), der über der Walze (2) querverlaufend angeordnet und an eine Druckluftquelle anschließbar ist, und der an den äußeren Enden eines längsverlaufenden, sich verengenden Abschnittes (7) zwei Düsenlippen aufweist, die eine bezüglich der Walze (2) in etwa radial gerichtete Luftbürste (16) erzeugen, dadurch gekennzeichnet, daß in dem sich verengenden Abschnitt (7) von jeder der Seitenwände (8) des sich verengenden Abschnittes hervorstehend eine Strömungsablenkvorrichtung (18) vorgesehen ist, die auf Mitteln (20) zum Einstellen ihrer Lage bezüglich der Seitenwand (8) befestigt ist, und die einerseits im Querschnitt eine mit der Form des Querschnittes des sich verengenden Abschnittes bis auf das funktionell bedingte Spiel identische Form und andererseits auf der der anderen Ablenkvorrichtung gegenüberliegenden Seite ein konvexes Profil (18a) aufweist, das die allgemeine Form einer Wölbfläche eines Tragflügels aufweist, und dessen Polkurve derart definiert ist, daß die Richtung der entlang diesem geführten Luftströmung fortschreitend nach außen ohne Ablösung von der Wölbfläche abgebeugt wird.

2. Vorrichtung nach Anspruch 1, dadurch gekennzeichnet, daß der stromaufwärts liegende Bereich jeder Ablenkvorrichtung (18) einstückig mit einer inneren Platte (25) ausgebildet ist, die durch die Seitenwand (8) des sich verengenden Abschnittes (7) durch einen Schlitz (26) durchgeht und den nicht genutzten seitlichen Bereich des sich verengenden Abschnittes dicht verschließt.

3. Vorrichtung nach Anspruch 1 oder 2, dadurch gekennzeichnet, daß jede Ablenkvorrichtung (18) an dem inneren Ende eines bezüglich der Seitenwand (8) des sich verengenden Abschnittes drehfesten zylindrischen Schaftes (20) befestigt ist, der axial durch eine mit dieser Wand verbundenen Hülse (22) durchgeht und ein äußeres, mit einem Gewinde (20a) versehenes Ende aufweist, auf dem ein sich gegen die Hülse (22) abstützender Stellknopf (23) schraubbar angeordnet ist.
